# EUROPEAN PATENT SPECIFICATION

(11) **EP 3 323 261 B1**
(45) Date of publication and mention of the grant of the patent: **09.08.2023**
(21) Application number: 16748397.3
(22) Date of filing: 18.07.2016
(51) Int. Cl.: H04W 4/70, H04W 8/20, H04W 48/02

(54) **NETWORK ACCESS CONFIGURED BASED ON DEVICE PROFILES**
AUF BASIS VON VORRICHTUNGSPROFILEN KONFIGURIERTER NETZWERKZUGANG
ACCÈS RÉSEAU CONFIGURÉ SUR LA BASE DE PROFILS DE DISPOSITIFS

(30) Priority: 16.07.2015 US 201562193477 P
(43) Date of publication of application: 23.05.2018
(73) Proprietor: Intel Corporation, Santa Clara, CA 95054 (US)
(72) Inventor: PINHEIRO, Ana Lucia A., Santa Clara, CA 95054 (US); MARTINEZ TARRADELL, Marta, Hillsboro, Oregon 97124 (US); ZAUS, Robert, 80686 München (DE); CHIN, Chen-Ho, 8540 Deerlijk VWV (BE)
(74) Representative: Goddar, Heinz J.
(86) International application number: PCT/US2016/042726
(87) International publication number: WO 2017/011827

(56) References cited:
- EP-A1- 2 605 595
- WO-A1-2012/115547
- US-A1- 2015 119 101

## Description

### Technical Field

The present disclosure relates to configuring access to a 3rd generation partnership project (3GPP) network. In particular, the present disclosure relates to configuring access to the evolved packet core (EPC) network based on a device profile.

### Background

Mobile communication has evolved significantly from early voice systems to today's highly sophisticated and integrated communication platform. 5G devices may use the support of many different types of services, catering for multiple verticals. The different internet of things (IoT) verticals may create diverse requirements from delay tolerant to ultra-low latency and from small data packets to video transmissions, for example.

The next wave of mobile communication is to mobilize and automate industries and industry processes. This is widely referred to as machine-type communication (MTC) and the loT. Tens of billions of smart devices will use their embedded communication capabilities and integrated sensors to act on their local environment and use remote triggers based on intelligent logic. These devices differ in terms of requirements with respect to capabilities, power consumption, and cost. IoT devices will also have a wide range of requirements on networking such as reliability, security, and performance (e.g., latency and/or throughput), among others. The creation of new services for vertical industries (e.g., health, automotive, home, and/or energy) may not be limited to connectivity but can require enablers from cloud computing, big data management, security, logistics, and other network-enabled capabilities.

EP 2 605 595 A1 discloses a communication system that includes a mobile device connectable to an LTE system and a 3G system; and an RNC configured to control mobility of the mobile device between the LTE system and the and a 3G system. When the mobile device sends the RNC a request for connection to thesystem instead of the LTE system because the LTE system imposes access restriction to restrict communication performed by the mobile device, the mobile device incorporates mobility information in the request for connection, the mobility information indicating that the mobile device hands over from the LTE system. In addition, when acquiring the mobility information from the mobile device the RNCrestrains the mobile devicefrom handing over to the LTE system.

US 2015/119101 A1 discloses concepts and technologies described herein relate to an enhancement to an access network discovery and selection function ("ANDSF") with a cell-type management object ("MO") within an ANDSF MO tree. According to one aspect disclosed herein, a system including an ANDSF can generate a policy for network selection. The policy can include network selection criteria based upon a cell-type. The cell-type may be a small cell cell-type, a macro cell cell-type, or a multi-standard metro cell ("MSMC") cell-type. The network selection criteria can be further based upon WI-FI availability. The system can send the policy to a mobile device. The mobile device can utilize the policy to select a network. In some embodiments, the network selection criteria includes network load information, local device information, user profile information, or some combination thereof.

### Summary

The invention is defined by the subject matter of the independent claims. Advantageous embodiments are subject to the dependent claims.

### Brief Description of the Drawings

FIG. 1 is a block diagram of a plurality of modes according to one embodiment.
FIG. 2 is a block diagram of a device profile component according to one embodiment.
FIG. 3 is a block diagram of a device profile component according to one embodiment.
FIG. 4 is a block diagram illustrating electronic device circuitry that may be eNodeB circuitry, user equipment (UE) circuitry, network node circuitry, or some other type of circuitry according to one embodiment.
FIG. 5 is a block diagram illustrating a method for configuring network access based on a device profile.
FIG. 6 is a block diagram illustrating a method for configuring network access based on a device profile.
FIG. 7 is a block diagram illustrating a method for configuring network access based on a device profile.
FIG. 8 is a block diagram illustrating components of a device according to one embodiment.
FIG. 9 is a block diagram illustrating components according to some embodiments.

### Detailed Description of Preferred Embodiments

Wireless mobile communication technology uses various standards and protocols to generate and/or transmit data between a base station and a wireless communication device. Wireless communication system standards and protocols can include, for example, a 3rd Generation Partnership Project (3GPP) long term evolution (LTE); the Institute of Electrical and Electronics Engineers (IEEE) 802.16 standard, which is commonly known to industry groups as worldwide interoperability for microwave access (WiMAX); and the IEEE 802.11 standard, which is commonly known to industry groups as Wireless Local Area Network (WLAN) or Wi-Fi. In 3GPP radio access networks (RANs) in LTE systems, a base station may include Evolved Universal Terrestrial Radio Access Network (E-UTRAN) Node B (also commonly denoted as evolved Node B, enhanced Node B, eNodeB, or eNB) and/or Radio Network Controllers (RNCs) in the E-UTRAN, which communicate with a wireless communication device, known as user equipment (UE). In LTE networks, the E-UTRAN may include a plurality of eNodeBs and may communicate with the plurality of UEs. LTE networks include a radio access technology (RAT) and core radio network architecture that can provide high data rate, low latency, packet optimization, and improved system capacity and coverage.

Different types of devices with different requirements for services may fit different profiles within each mode and/or state of operation. In a number of embodiments, a framework to create device profiles can be utilized to configure access to a network in a 5G system, for example.

In some examples, configuring access to a network can include receiving an uplink signal from a user equipment (UE) and accessing a device profile corresponding to the UE. Access to an EPC network can be configured based on the device profile.

Reference is now made to the figures, in which like reference numerals refer to like elements. For clarity, the first digit of a reference numeral indicates the figure number in which the corresponding element is first used. In the following description, numerous specific details are provided for a thorough understanding of the embodiments disclosed herein. However, those skilled in the art will recognize that the embodiments described herein can be practiced without one or more of the specific details, or with other methods, components, or materials. Further, in some cases, well-known structures, materials, or operations are not shown or described in detail in order to avoid obscuring aspects of the embodiments. Furthermore, the described features, structures, or characteristics may be combined in any suitable manner in one or more embodiments.

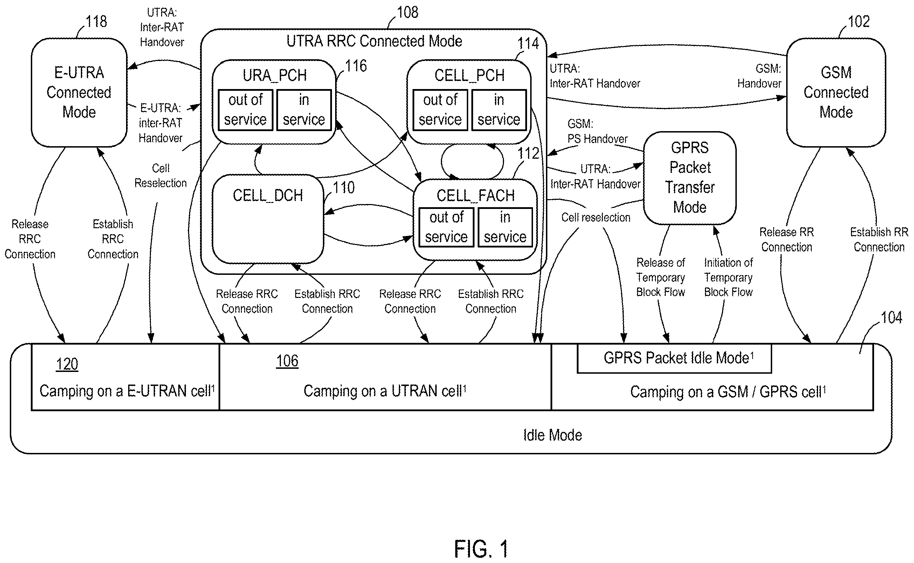

FIG. 1 is a block diagram of a plurality of modes according to one embodiment. FIG. 1 includes a global system for mobile communication (GSM) connected mode 102, a GSM idle mode 104, a radio resource control (RRC) idle mode 106, an RRC connected mode 108, an LTE connected mode 118, and an LTE idle mode 120. FIG. 1 also shows a number of transitions between the different modes. For example, FIG. 1 shows a transition between a GSM connected mode 102 and a GSM idle mode 104, among other transitions shown in FIG. 1.

In 3GPP systems, a device can be in different modes of operation. For example, in GSM the UE can be in a GSM connected mode 102 or GSM idle mode 104/packet transfer modes. In a universal mobile telecommunications system (UMTS) the UE can be in the RRC idle mode 106 or the RRC connected mode 108. Moreover, while in the RRC connected mode 108, the UE can be in different divisions of the RRC connected mode 108. For example, the UE can be in a CELL_DCH division 110, a CELL_FACH division 112, a CELL_PCH division 114, and/or a URA_PCH division 116, among other possible divisions. Each state of the UE can define the procedure the UE has to perform regarding mobility, reception of paging, data transmission, reception, and measurements, among other procedures. In LTE systems the states have been simplified such that LTE systems only have the RRC idle mode 106 and the RRC connected mode 108. That is, in LTE systems there may be no separate divisions within the RRC connected mode 108. As used herein, the terms mode and state are used interchangeably. For example, a UE in an RRC connected mode 108 can be in an RRC connected state. As previously described, FIG. 1 shows the states and transitions for the GSM system, the UMTS system, and the LTE system.

A selection of state in each of these technologies can be based on data activity. Data activity can include whether or not the UE is transmitting and/or receiving data, which type of channels are used to transmit and/or receive the data, and how fast the network can page the device to start receiving data, among other possible data activities.

In 5G, service driven systems may be featured. Because of the many types of devices connecting to the network and the many uses of mobile broadband, 5G will have many new use cases, each with its own set of requirements. For example, the use case, "Internet of Things," may utilize a connectionless service provision, while a "Mission Critical" use case may utilize low latency and high reliability services. 5G may employ different use cases, but also different types of terminals, radio environments, and network loads as well as business and pricing models. This will result in a flexible set of customizable services that mobile operators can build into unique service offers.

Depending on the type of UE and the type of services that UE supports, the conditions that may trigger a state transition of a UE may differ based on the state of the UE. Furthermore, the behavior of the UE within a mode/state may also vary.

For example, if a UE is stationary, then mobility procedures may not be needed and paging can be limited to one cell. If a UE only sends small amounts of data in connectionless mode, then the UE may not support a connected mode and the small amounts of data can be sent in an idle mode (e.g., GSM idle mode 104, RRC idle mode 106). The examples provided herein are for illustrative purposes and should not be interpreted as limiting.

The next wave of mobile communication is to mobilize and automate industries and industry processes. This is widely referred to as machine-type communication (MTC) and the loT. As used herein, the term device refers to a UE. The device may utilize embedded communication capabilities and integrated sensors to act on their local environment and use remote triggers based on intelligent logic. These UEs may differ in terms of requirements with respect to capabilities, power consumption, and cost. IoT UEs may have a wide range of networking requirements such as reliability, security, and performance (e.g., latency and/or throughput), among others. The creation of new services for vertical industries (e.g., health, automotive, home, energy) may not be limited to connectivity but can incorporate enablers from cloud computing, big data management, security, logistics, and other network-enabled capabilities.

5G may operate in a highly heterogeneous environment characterized by the existence of multiple types of access technologies, multi-layer networks, multiple types of devices, and/or multiple types of user interactions, etc.

So far, the services provided by 3GPP UE are mostly centered on voice and/or data. Mobile broadband is an application of UEs. UEs behave similarly performing voice calls and/or internet browsing/email. Moving forward, 5G UEs may utilize the support of many different types of services, catering for multiple verticals.

The different IoT verticals may include a healthcare vertical, a logistics vertical, an energy/utilities vertical, a public infrastructure vertical, a building/construction vertical, a transportation vertical, a retail/consumer vertical, and an industry vertical among other types of verticals. The IoT verticals may create diverse requirements from delay tolerant to ultra-low latency and from small data packets to video transmissions.

The healthcare vertical can include a care provider, a medical device manufacturer, and/or a health insurer. The logistics vertical can include asset tracking services and/or shipping. The energy/utilities vertical can include electric, water, and waste, aggregators, meter manufacturers, and/or pipeline/refinery management. The public infrastructure vertical can include traffic control, facilities management, emergency services, and/or security/defense. The building/construction vertical can include energy management and/or security. The transportation vertical can include automotive infotainment hardware/services, fleet management, transportation insurance, and/or mass transportation. The retail/consumer vertical can include appliances/housewares, personal device manufacturer, signage, and/or vending. The industrial vertical can include manufacturing/fabrication, laboratory/pharma, and agribusiness/farming, among other possible verticals.

The behavior of a UE can be defined using RRC modes (e.g., states). The RRC modes can be used because devices that are in different RRC modes behave differently. The behavior of a UE can also be defined using a delay tolerant functionality. The delay tolerant functionality can be catered for MTC devices that are tolerant to larger delays and thus associated with lower priority.

In 5G, in order to support the many different types of devices with different requirements for services, different devices may fit different profiles within each mode (e.g., state) of operation. A number of examples described herein disclose a framework to create device profiles targeting, among others, in 5G systems.

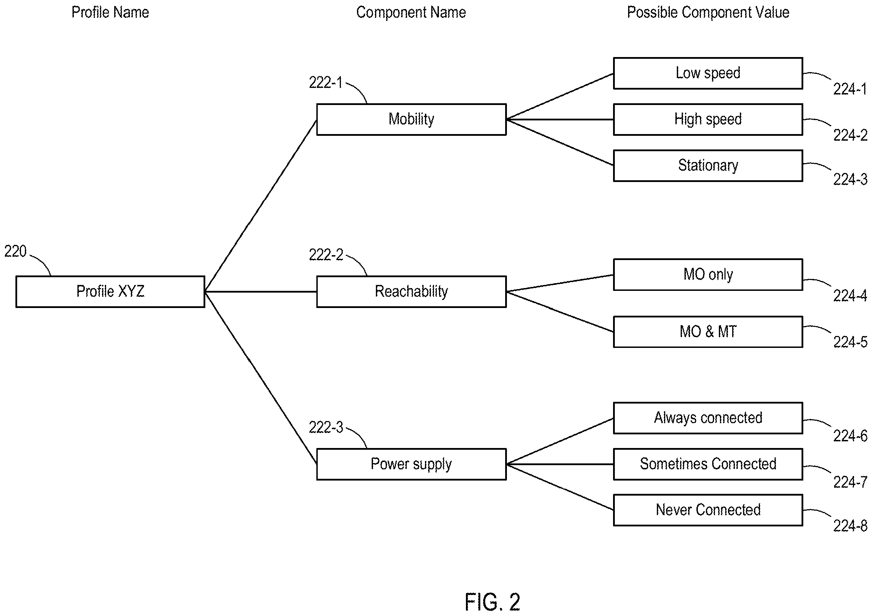

FIG. 2 is a block diagram of a device profile component according to one embodiment. FIG. 2 includes profile value options such as a profile name 220, device profile components 222-1, 222-2, and 222-3, and component values 224-1, 224-2, 224-3, 224-4, 224-5, 224-6, 224-7, and 224-8. The device profile components 222-1, 222-2, and 222-3 can be referred to herein as device profile components 222. The component values 224-1, 224-2, 224-3, 224-4, 224-5, 224-6, 224-7, and 224-8 can be referred to herein as component values 224.

A user profile can characterize a user. However, some UEs are not necessarily associated to a user such as wireless sensors which are not operated by a user but rather perform machine to machine communication. A device profile disclosed here can be used to characterize a device (e.g., UE) and its behavior. For example, the procedures performed by the UE may change depending on the device profile. The network may handle each UE based on the device profile. For example, an EPC network may configure network access to a UE based on a corresponding device profile.

In some examples, a device profile can be part of a user profile. For example, the device profile can be a component of the user profile. In other examples, the device profile can be defined independently from the user profile.

A device profile is defined by one or more device profile components 222, their corresponding component values 224, and/or a desired or expected behavior of the UE. Among others, the following device profile components 222 are disclosed as well as their possible setting or values that those components might take by the different UEs as part of a device profile. As described below, a device profile can be defined by a list of device profile components 222 with their corresponding component values 224.

The device profile component 222-1 is a mobility component that can have the component value 224-1 (e.g., low-speed mobile), the component value 224-2 (e.g., high-speed mobile), or the component value 224-3 (e.g., stationary). The device profile component 222-2 is a reachability component that can have the component value 224-4, (e.g., device only supports mobile originated (MO) services) or the component value 224-5 (e.g., device does not need to support paging, device supports mobile originated (MO) and mobile terminated (MT) services). The device profile component 222-3 is a power supply component that can have the component value 224-6 (e.g., devices always connected to a power supply such as home water meters), the component value 224-7 (e.g., devices sometimes connected to a power supply such as wearable devices), the component value 224-8 (e.g., devices never connected to a power supply such as a sensor).

The device profile can also be defined by other device profile components not shown in FIG. 2. For example, the device profile can be defined by a group component, expected battery lifetime component, time control component, mobility restricted component, data activity component, emergency component, security component, radio interface component, dedicated communication component, and/or dedicated network component.

The group component can have a component value that describes a device that is part of a group and does not operate in standalone mode or a component value that describes a device that can operate in a standalone mode. The expected battery lifetime component can have a component value that describes a battery life that is greater than a predefined battery life or a component value that describes a battery life that is smaller than the predefined battery life.

The time control component can have a component value that describes a device that only transmits and receives in specific time windows or a component value that describes a device that can transmit and receive any time. The mobility restricted component can have a component value that describes a device that moves within a specific area (e.g., tracking area, city, state, or country), a component value that describes a device that moves within a tracked path, or a component value that describes a device that moves within a short range distance from a given location (e.g., 50 miles from home).

The data activity component can have a component value that describes a device with frequent (e.g., periodic) data burst activity or a component value that describes a device with infrequent (e.g., aperiodic) data burst activity. The emergency component can have a component value that describes a device used to trigger high priority (e.g., emergency) calls or a component value that describes a device used to trigger non-high priority calls.

The security component can have a component value that describes a device that uses a lower-end security mechanism (e.g., if the device already has a security encrypted and protected mechanism or if security is not a concern for the device), a component value that describes a device that uses a normal security mechanism, or a component value that describes a device that uses a high-end security mechanism. The terms normal security mechanism and/or high-end security mechanism are relative to a function of the device, an industry, and/or data associated with the device. As such, the term high-end security mechanism describes security mechanisms that are more stringent than the normal security mechanism.

The radio interface component can have a plurality of component values each of which describes one of a radio technology and/or interface such as an LTE radio technology, a device-to-device (D2D) radio technology, a WiFi radio technology, a broadcasting technology (BT) radio technology, and a vehicular communication radio technology, among other possible radio technologies. The radio technologies or mechanisms used can include radio technologies defined in 5G or an evolution of current radio technologies.

The dedicated communication component can have a component value that describes a device that connects to a single pre-defined access point name (APN) such as a device that only accesses a particular server and/or a virtual private network (VPN). The dedicated network component can have a component value that describes a device that connects using dedicated networks such as networks dedicated to MTC devices only.

Based on the device profile components 222, an example first profile for a smartphone UE can include a mobility component (e.g., device profile component 222-1) with a high-speed value (e.g., component value 224-2), a reachability component (e.g., device profile component 222-2) with an MO and MT value (e.g., component value 224-5), a power supply component (e.g., device profile component 222-3) with a sometimes connected value (e.g., component value 224-7). An example second profile for a sensor UE can include a mobility component (e.g., device profile component 222-1) with a stationary value (e.g., component value 224-3), a reachability component (e.g., device profile component 222-2) with an MO only value (e.g., component value 224-4), or a power supply component (e.g., device profile component 222-3) with a never connected value (e.g., component value 224-8).

In some examples, each device profile can have different kinds and numbers of components. A UE can be associated with a single device profile or a plurality of device profiles.

The behavior of a UE can be defined based on a device profile. For example, the behavior of the device can be configured based on the component values 224 of the profile device components 222, the list of device profile components 222, and/or whether the device profile selected for a UE changes over time. The device can be configured based on any combination of the above.

In some examples, the component values 224 and/or device profile components 222 can be static, semi-static, or dynamic. For example, if a device profile includes component values 224 that are static, then the UE cannot change, over time, the value assigned to a corresponding device profile component 222. If a device profile includes components values 224 that are semi-static then a set of component values 224 may be pre-defined and/or pre-configured to limit the option of values that a corresponding device profile component can take, such that the UE can only select between the allowed values. If a device profile includes component values 224 that are dynamic, then a set of component values 224 may be changed over time.

The list of device profile components 222 that comprises a device profile can also be defined as static, semi-static, or dynamic. If the list of device profile components 222 is static, then the UE cannot change the list of device profile components 222 defined within the device profile. If the list of device profile components 222 is semi-static, then a set of components may be pre-defined and/or pre-configured to limit the device profile components that can be used, understanding that the UE chooses only between those allowed components. If the list of device profile components 222 is dynamic, then a list of device profile components can change over time

In some examples, the device profile can also be defined as static, semi-static, or dynamic. If the device profile is static, then the association between a UE and the device profile cannot be changed over time. If the device profile is semi-static, then a set of device profiles are pre-defined and/or pre-configured and the UE can only be associated with the set of device profiles. If the device profile is dynamic, then an association between a UE and a device profile can be changed over time.

A UE, an eNodeB, and/or a different EPC network component can select a device profile. According to embodiments of the invention, the UE selects its device profile. The selected device profile can be associated with the UE. The EPC network may define procedures to enforce, trigger, control, and/or indicate the specific device profile that is associated with the UE.

As previously described, a UE can be associated with a plurality of device profiles. If multiple device profiles are associated with the UE at a same time, then a set of rules can define the interaction, prioritization, overwriting, and/or combination of the device profiles. A set of rules may define which of the associated device profiles are used to configure an access to an EPC network. For example, a first device profile may be selected to configure access to the EPC network before a predefined time and a second device profile may be selected to configure access to the EPC network after the predefined time. In another example, multiple device profiles associated with a UE can be selected to configure access to the EPC network.

In some embodiments, when the UE initiates a boot sequence and/or when the UE is switched on, then the UE can select the device profile to use. The device profiles available to the UE can be pre-configured in the device. For example, the device profile can be pre-configured in a subscriber identification module card and be part of the subscription information.

In other embodiments, the device profiles can be configured and/or sent by the EPC network (e.g., eNodeB) to the UE using an open mobile alliance - device management (OMA-DM) functionality. For example, the network can generate and/or send an open mobile alliance - management object to a UE to provide the device profile to the UE. Optionally the device profiles available could be sent via a dedicated RRC or NAS message.

The UE may notify an EPC network, via an eNodeB, of a profile being selected. In some embodiments, the UE and the EPC network can coordinate the selection of the device profile to be used for configuring access to the EPC network, for example, via dedicated a RRC message and/or a non-access stratum (NAS) message. A device profile can be selected during an attach and registration (e.g., in an attach request and/or a tracking area update message) of the UE, during service establishment (e.g., in a service request message), during RRC connection establishment, as part of the UE capabilities, and as part of a new message and/or information element (IE) that conveys the device profile related description that is used.

In some examples, a selected device profile can be replaced (e.g., switched) during an idle mode, during an idle to connected transitions, and/or while in a connected mode. In addition, the UE may not indicate and/or coordinate with the network on the selection of a device profile to be used by the UE, as shown in the embodiment example below.

If the device profile is static and the UE is configured with a device profile as part of a subscription procedure, then the UE may not provide the information of the selection to the network, as the network stores the device profile based on the UE subscription. In another embodiment, the UE can select a device profile and provides the information to the network upon an attach procedure. The UE may detach from the EPC network and attach/register again using the new selected profile to change a selected device profile. That is, the UE may start a new service with a new device profile. The new service can be different from a service the UE already started and may be ongoing.

Depending on the device profile, specific procedures may or may not be required to provide access to an EPC network. For example, if a UE is stationary as defined in an associated device profile, then location updates may not be utilized to provide access to the EPC network. If the UE only supports MO calls as defined in the device profile, then location updates or paging is not needed to provide access to the EPC network. If the UE has strict power limitations as defined in the device profile, then a very long discontinuous reception (DRX) can be utilized to provide access to the EPC network. The usage of a device profile with a corresponding list of device profile components 222 and their associated device values 224 can determine how the UE and/or the EPC network act and/or interact.

For example, the device profile can affect a random access configuration or mechanism used by the EPC network and/or the associated UE. The device profile can affect an access control mechanism or the configuration used. The device profile can affect the kind of connection to be used to access the EPC network, by UEs, by relay nodes, and/or by other technologies.

The device profile can include a device type. Device types can be smartphone or IoT device, for example, among other device types. The device profile is different from a device type because while a device type is static the device profile may not be static. For example, although a UE can be associated with a device type that is a smartphone device type, the UE may be used as an IoT device and as such the UE may be associated with an IoT device type even though the UE may be categorized as a smartphone device type. As such, using a device type to configure access to an EPC network is not the same as using a device profile to configure access to the EPC network because the device profile can describe the current use of the UE rather than an intended use of the UE. As such, in a number of examples, the device type can be replaced by a device profile to configure access to the EPC network. In addition, a device profile can be another level of categorization that can be defined independently or in relation to that device type. The device profile can also allow the network to decide which slice of the network is to be allocated to the UE.

In some embodiments, a hierarchical approach can be used when access to the EPC network based on a device profile and/or other factors. The device profile and other factors can be used to configure access to an EPC network. For example, a device profile without any other factors can be used to configure access control mechanisms for the EPC network. A device profile and a category of application can be used to configure access control mechanisms for the EPC network. The category of application can describe an application that the UE is servicing, requesting EPC network resources. For example, if an application that is storing or executing using the UE sends and/or receives network traffic, then a category of the application can be used along with the device profile to configure access to the EPC network.

A device profile and a service type can be used to configure access control mechanisms for the EPC network. A service type can describe a type of service that a UE associated with the device profiles is requesting. A device profile and a communication type can be used to configure access control mechanisms for the EPC network. The communication type can describe radio technology and/or interface used by the UE to communicate with the EPC network and/or other devices. Other factors than those described herein can be used to configure access to the EPC network.

In some embodiments, a device profile and one or more factors can be used to configure access to the EPC network. For example, a device profile, a communication type, and a service type can be used to configure access control mechanisms for the EPC network.

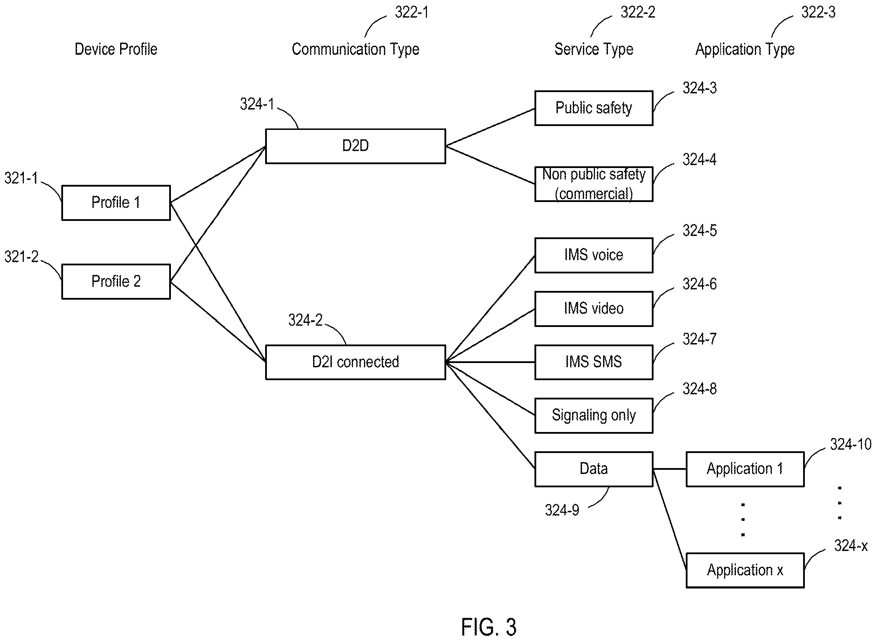

FIG. 3 is a block diagram of a device profile component according to one embodiment. FIG. 3 includes device profiles 321-1 and 321-2 and are referred to herein as device profiles 321. Device profile components 322-1, 322-2, and 322-3 are referred to herein as device profile components 322. Component values 324-1, 324-2, 324-3, 324-4, 324-5, 324-6, 324-7, 324-8, 324-9, 324-10, ... 324-X, referred to herein as component values 324.

The device profile component 322-1 (e.g., communication type) can have the component value 324-1 (e.g., D2D) or the component value 324-2 (e.g., device-to-infrastructure (D2I)). The device profile component 322-2 (e.g., service type) can have the component value 324-3 (e.g., public safety), the component value 324-4 (e.g., non-public safety (commercial)), the component value 324-5 (e.g., IP Multimedia Subsystem (IMS) voice), the component value 324-6 (e.g., IMS video), the component value 324-7 (e.g., IMS short message service (SMS)), the component value 324-8 (e.g., signaling only), and the device component value 9 (e.g., data). The device profile component 322-3 (e.g., application type) can have the component value 324-10 (e.g., application 1) to the component value 324-X (e.g., application X).

A D2D includes communication between UEs using air interface resources. A D2I includes communication between a UE and an EPC network using air interface and core network resources.

FIG. 3 shows a hierarchy of device profile components 322. A hierarchy of device profile components 322 includes giving higher precedence to the device profile component 322-1 than the device profile component 322-2 and the device profile component 322-3. The device profile component 322-2 has a higher precedence than the device profile component 322-3. In other examples, the hierarchy of device profiles can be different than that shown in FIG. 3

Further details are provided for clarification on how the hierarchical approach can be used where access to the EPC network can be configured based on a device profile and then a communication type.

For example, if an EPC network only provides access to UEs with device profiles including a component value 324-1 for device profile component 322-1, then access can be restricted for UEs associated with device profiles having a component value 324-2 for device profile component 322-1 regardless of the component values for the device profile component 322-2 or the device profile component 322-3. If the EPC network only provides access to UEs with device profiles including the component value 324-9 for device profile component 322-2, then access can be restricted for UEs associated with device profiles having the component values 324-3 to 324-8 regardless of the component values for the device profile component 322-3.

That is, control based on service type (e.g., device profile component 322-2) applies if there is no access control based on the communication type (e.g., 322-1). This allows for a scalable architecture where communication types, service types, and application types may be added in the future.

In some examples, the device profile may be associated with an application running on a UE. That is, the device profile may be associated with the UE only while a particular application is controlling the UE and as such only when the particular application is communicating with the EPC network via the UE.

In some embodiments, the device profile can be used to configure the UE. That is, the UE can be configured based on the device profile. For example, if an EPC network is providing configuration commands to the UE, then the type of communication commands can be selected based on the device profile associated with the UE.

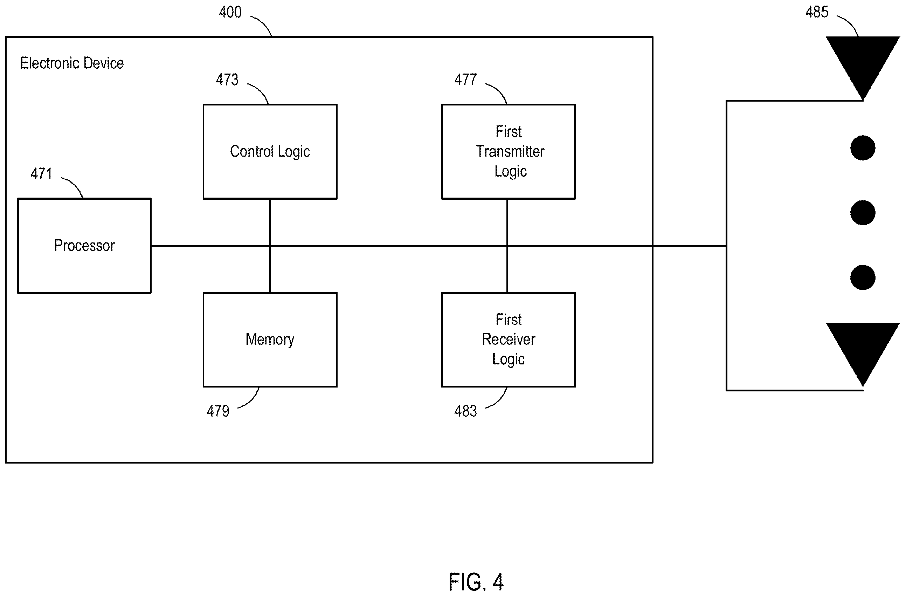

FIG. 4 is a block diagram illustrating electronic device circuitry that may be eNodeB circuitry, user equipment (UE) circuitry, network node circuitry, or some other type of circuitry according to one embodiment. FIG. 4 illustrates an electronic device 400 that may be, or may be incorporated into or otherwise part of, an eNodeB, a UE, or some other type of electronic device in accordance with various embodiments. Specifically, the electronic device 400 may be logic and/or circuitry that may be at least partially implemented in one or more of hardware, software, and/or firmware. In embodiments, the electronic device logic may include radio transmit/transmitter logic (e.g., a first transmitter logic 477) and receive/receiver logic (e.g., a first receiver logic 483) coupled to a control logic 473 and/or a processor 471. In embodiments, the transmit/transmitter and/or receive/receiver logic may be elements or modules of transceiver logic. The first transmitter logic 477 and the first receiver logic 483 may be housed in separate devices. For example, the first transmitter logic 477 can be incorporated into a first device while the first receiver logic 483 is incorporated into a second device, or the transmitter logic 477 and the receiver logic 483 can be incorporated into a device separate from a device including any combination of the control logic 473, a memory 479, and/or the processor 471. The electronic device 400 may be coupled with or include one or more antenna elements 485 of one or more antennas. The electronic device 400 and/or the components of the electronic device 400 may be configured to perform operations similar to those described elsewhere in this disclosure.

In embodiments where the electronic device 400 implements, is incorporated into, or is otherwise part of a UE and/or an eNodeB, or device portion thereof, the electronic device 400 can generate an ESS. The processor 471 may be coupled to the first receiver and first transmitter. The memory 479 may be coupled to the processor 471 having control logic instructions thereon that, when executed, generate and/or transmit the ESS.

In embodiments where the electronic device 400 receives data, generates data, and/or transmits data to/from a UE to implement a downlink signal including the ESS, the processor 471 may be coupled to a receiver and a transmitter. The memory 479 may be coupled to the processor 471 having control logic 473 instructions thereon that, when executed, may be able to generate the ESS using a root index generated from a physical cell ID.

As used herein, the term "logic" may refer to, be part of, or include an Application Specific Integrated Circuit (ASIC), an electronic circuit, the processor 471 (shared, dedicated, or group), and/or the memory 479 (shared, dedicated, or group) that execute one or more software or firmware programs, a combinational logic circuit, and/or other suitable hardware components that provide the described functionality. Specifically, the logic may be at least partially implemented in, or an element of, hardware, software, and/or firmware. In some embodiments, the electronic device logic may be implemented in, or functions associated with the logic may be implemented by, one or more software or firmware modules.

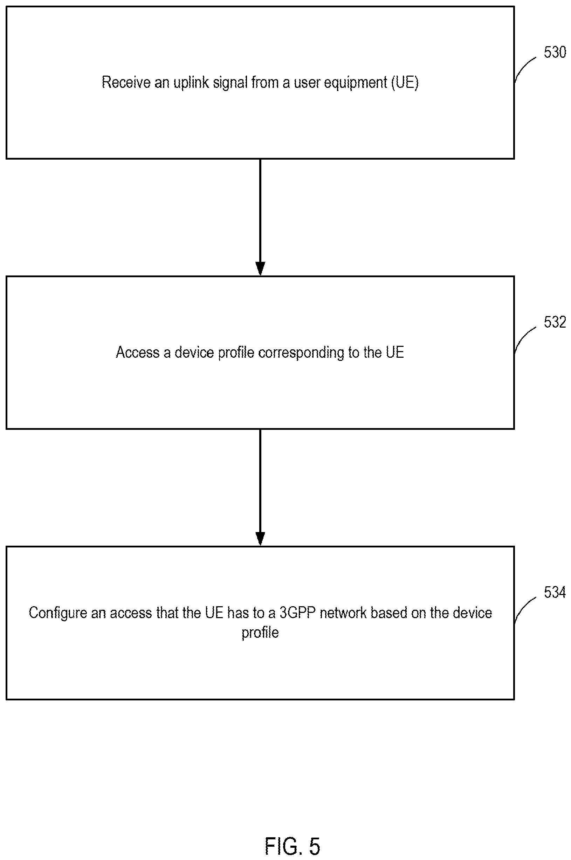

FIG. 5 is a block diagram illustrating a method for configuring network access based on a device profile. The method includes decoding 530 uplink data received from a UE, accessing 532 a device profile corresponding to the UE from the decoded uplink data, and configuring 534 an access that the UE has to an EPC network based on the device profile.

The access that the UE has to the EPC network can include at least one or more of a random access configuration implemented by the EPC network to provide the UE with access to the EPC network, a signaling mechanism implemented for the UE, radio resource control (RRC) procedures and a non-access stratum (NAS) procedures supported for the UE, a kind of connection supported for the UE, and a slice of the EPC network that the UE has access to. As used herein, a network slice describes a connectivity service defined by a number of customizable software-defined functions that govern geographical coverage area, duration, capacity, speed, latency, robustness, security and availability, among others. In some examples, network slices can be implemented in 5G systems. Examples of network slices can include a smart meter slice, a sensor utility slice, a media slice, and capacity/coverage on demand slices, among other possible slices. That is, each of the above slices can utilize a different portion of the 5G system. In some examples, the slices can be independent of each other or the slices can utilize shared resources.

The device profile can include one or more of a mobility component, a reachability component, a power supply component, a group component, an expected battery lifetime component, a time control component, a mobility restricted component, a data activity component, an emergency component, a security component, a radio interface component, a dedicated communication component, and a dedicated network component. The mobility component can include one of a mobility value, a stationary value, and a high-speed mobile value. The reachability component includes one of an MO service value, a does not support paging value, and an MT service value. The power supply component includes one of a device running on battery for short term value, a device running on battery for long term value, a device connected to a power supply value, and a device's sometimes charged value.

The group component can include one of a device that is part of a group and does not operate in a standalone mode value, and a device can operate in a standalone mode value. The expected battery lifetime component can include one of a first time period battery life value and a second period battery life value. Thus, a UE can be categorized under a first time period battery life value if the UE has a battery life that is less than a predefined time period, and the UE can be categorized under the second time period battery life if the UE has a battery life that is greater than the predefined time period. The predefined time period can be a second, a minute, a day, a week, or a month, among other possible time periods or combination of time periods. The expected battery life component has a value from a plurality of values that define different durations of time.

The time control component can include one of a restricted transmission value and an unrestricted transmission value. The mobility restricted component can include one of an area value, a path value, and a location value. The data activity component includes one of a periodic data burst value and an aperiodic data burst value. The periodic data burst value can define a data burst of a UE that is periodic and/or regular while the aperiodic data burst value can define a data burst of a UE that is aperiodic and/or un-regular.

The emergency component can include one of a high priority value and a low priority value. The security component can include one of a low security value, a baseline security value, and a high security value. The radio interface component can include one of a D2D value, a D2I value, a WiFi value, a Bluetooth value, and a vehicular communication value. The dedicated communication component includes one of a pre-defined access point network (APN) value and a multiple APNs value. The dedicated network component includes one of a specific network value and a generic EPC network value.

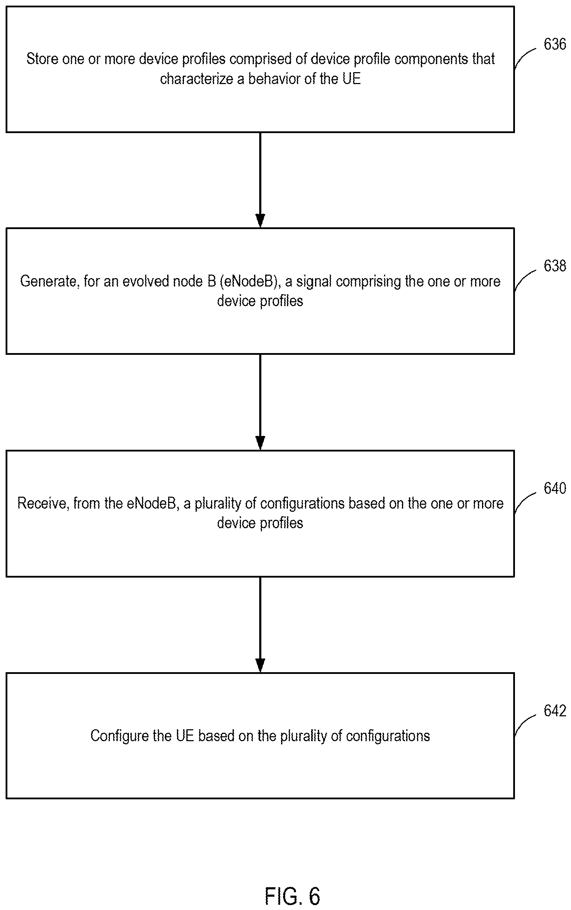

FIG. 6 is a block diagram illustrating a method for configuring network access based on a device profile. The method includes storing 636 one or more device profiles comprised of device profile components that characterize a behavior of the UE. The method includes generating 638, for an eNodeB, uplink data comprising the one of the device profiles. The method can also include decoding 640 downlink data, received from the eNodeB, comprising a plurality of configurations based on the one device profile. The method can further include and configuring 642 the UE based on the plurality of configurations.

The device profile components can be static and a value assigned to any of the device profile components can also be static. In some examples, the device profile components can be dynamic and a value assigned to any of the device profile components can also be dynamic over time. In other examples, the device profile components can be semi-static and a value that can be assigned to any of the device profile components is limited. In some embodiments, the UE is associated with one device profile at a given time or more than one device profile at a given time.

The method can further includes selecting a device profile from the one or more device profiles to use during an initial registration of the UE with the EPC network. The method further includes informing the EPC network of the selected device profile. Informing the EPC network of the selected device profile can occur via at least one of an attach request and a tracking area update request messages.

The method can furtrher include selecting a device profile to use during a service establishment via a service request message. The method can further include selecting a device profile from the one or more device profiles to use during an RRC connection establishment.

The method can also include selecting a device profile from the one or more stored device profiles, informing the EPC network of the selected device profile, and informing the EPC network of UE capability information associated with the UE. In some examples, the UE capability information can be provided via a UE capability message.

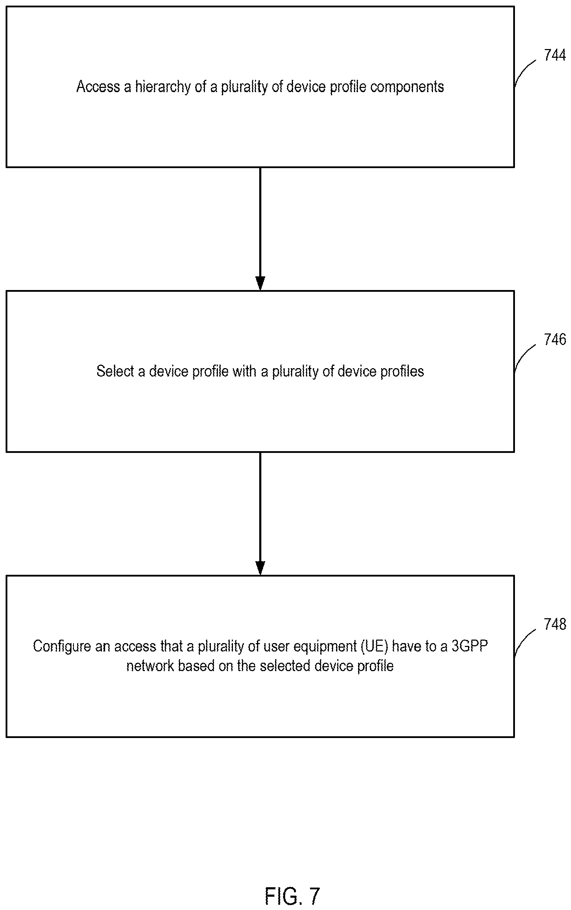

FIG. 7 is a block diagram illustrating a method for configuring network access based on a device profile. The method can include storing 744 a plurality of device profiles, selecting 746 a device profile from the plurality of device profiles, and configuring 748 an access that a plurality of UEs have to an EPC network based on the selected device profile.

In some examples, the EPC network can bar (e.g., restrict) access to the EPC network for UEs that are, at least, configured with the selected device profile. The EPC network can also bar access to the EPC network for UEs that are configured with the selected device profile and a communication type. The EPC network can further bar access to the EPC network for UEs that are configured with the selected device profile and request access to the 3GPP to support at least one of a type of service and application. The EPC network can also bar access to the EPC network for UEs that are associated with the selected device profile, a communication type, and request access to the 3GPP to support at least one of a type of service and application. The EPC network can also include a radio access network (RAN) node that broadcasts at least one type of device that is barred to access the EPC network based at least on a selected device profile.

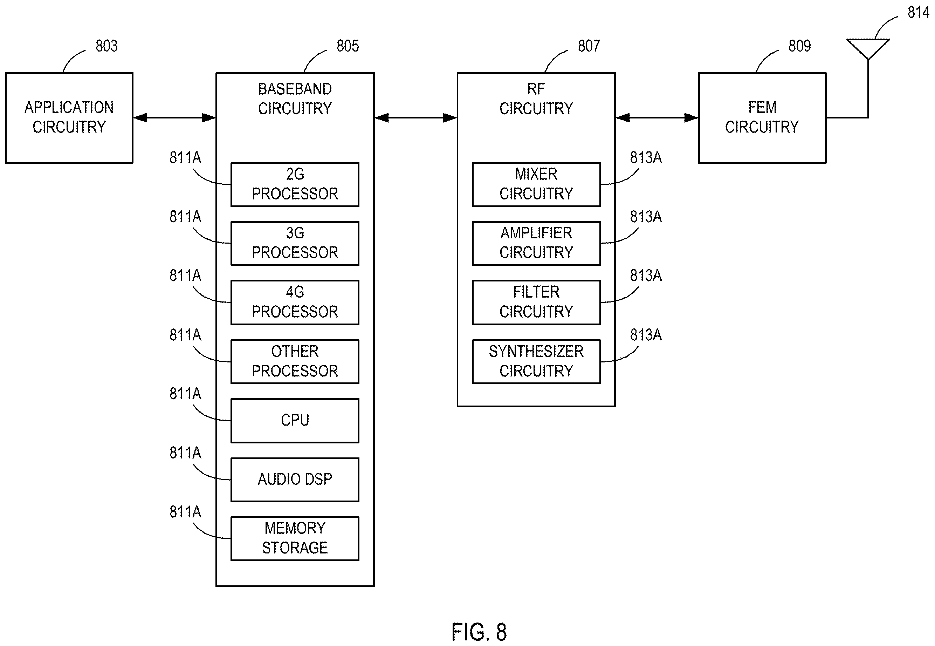

FIG. 8 is a block diagram illustrating components of a device according to one embodiment. In some embodiments, the device may include application circuitry 803, baseband circuitry 805, Radio Frequency (RF) circuitry 807, front-end module (FEM) circuitry 809, and one or more antennas 814, coupled together at least as shown in FIG. 8. Any combination or subset of these components can be included, for example, in a UE device or an eNodeB device.

The application circuitry 803 may include one or more application processors. By way of non-limiting example, the application circuitry 803 may include one or more single-core or multi-core processors. The processor(s) may include any combination of general-purpose processors and dedicated processors (e.g., graphics processors, application processors, etc.). The processor(s) may be operably coupled and/or include memory/storage, and may be configured to execute instructions stored in the memory/storage to enable various applications and/or operating systems to run on the system.

By way of non-limiting example, the baseband circuitry 805 may include one or more single-core or multi-core processors. The baseband circuitry 805 may include one or more baseband processors and/or control logic. The baseband circuitry 805 may be configured to process baseband signals received from a receive signal path of the RF circuitry 807. The baseband circuitry 805 may also be configured to generate baseband signals for a transmit signal path of the RF circuitry 807. The baseband circuitry 805 may interface with the application circuitry 803 for generation and processing of the baseband signals, and for controlling operations of the RF circuitry 807.

By way of non-limiting example, the baseband circuitry 805 may include at least one of a second generation (2G) baseband processor 811A, a third generation (3G) baseband processor 811B, a fourth generation (4G) baseband processor 811C, and other baseband processor(s) 811D for other existing generations and generations in development or to be developed in the future (e.g., fifth generation (5G), 6G, etc.). The baseband circuitry 805 (e.g., at least one of the baseband processors 811A-811D) may handle various radio control functions that enable communication with one or more radio networks via the RF circuitry 807. By way of non-limiting example, the radio control functions may include signal modulation/demodulation, encoding/decoding, radio frequency shifting, other functions, and combinations thereof. In some embodiments, modulation/demodulation circuitry of the baseband circuitry 805 may be programmed to perform Fast-Fourier Transform (FFT), precoding, constellation mapping/demapping functions, other functions, and combinations thereof. In some embodiments, encoding/decoding circuitry of the baseband circuitry 805 may be programmed to perform convolutions, tail-biting convolutions, turbo, Viterbi, Low Density Parity Check (LDPC) encoder/decoder functions, other functions, and combinations thereof. Embodiments of modulation/demodulation and encoder/decoder functions are not limited to these examples, and may include other suitable functions.

In some embodiments, the baseband circuitry 805 may include elements of a protocol stack. By way of non-limiting example, elements of an evolved universal terrestrial radio access network (E-UTRAN) protocol include, for example, physical (PHY), media access control (MAC), radio link control (RLC), packet data convergence protocol (PDCP), and/or radio resource control (RRC) elements. A central processing unit (CPU) 811E of the baseband circuitry 805 may be programmed to run elements of the protocol stack for signaling of the PHY, MAC, RLC, PDCP and/or RRC layers. In some embodiments, the baseband circuitry 805 may include one or more audio digital signal processor(s) (DSP) 811F. The audio DSP(s) 811F may include elements for compression/decompression and echo cancellation. The audio DSP(s) 811F may also include other suitable processing elements.

The baseband circuitry 805 may further include a memory/storage 811G. The memory/storage 811G may include data and/or instructions for operations performed by the processors of the baseband circuitry 805 stored thereon. In some embodiments, the memory/storage 811G may include any combination of suitable volatile memory and/or non-volatile memory. The memory/storage 811G may also include any combination of various levels of memory/storage including, but not limited to, read-only memory (ROM) having embedded software instructions (e.g., firmware), random access memory (e.g., dynamic random access memory (DRAM)), cache, buffers, etc. In some embodiments, the memory/storage 811G may be shared among the various processors or dedicated to particular processors.

Components of the baseband circuitry 805 may be suitably combined in a single chip or a single chipset, or disposed on a same circuit board in some embodiments. In some embodiments, some or all of the constituent components of the baseband circuitry 805 and the application circuitry 803 may be implemented together, such as, for example, on a system on a chip (SOC).

In some embodiments, the baseband circuitry 805 may provide for communication compatible with one or more radio technologies. For example, in some embodiments, the baseband circuitry 805 may support communication with an evolved universal terrestrial radio access network (E-UTRAN) and/or other wireless metropolitan area networks (WMAN), a wireless local area network (WLAN), or a wireless personal area network (WPAN). Embodiments in which the baseband circuitry 805 is configured to support radio communications of more than one wireless protocol may be referred to as multi-mode baseband circuitry.

The RF circuitry 807 may enable communication with wireless networks using modulated electromagnetic radiation through a non-solid medium. In various embodiments, the RF circuitry 807 may include switches, filters, amplifiers, etc. to facilitate the communication with the wireless network. The RF circuitry 807 may include a receive signal path, which may include circuitry to down-convert RF signals received from the FEM circuitry 809, and provide baseband signals to the baseband circuitry 805. The RF circuitry 807 may also include a transmit signal path, which may include circuitry to up-convert baseband signals provided by the baseband circuitry 805, and provide RF output signals to the FEM circuitry 809 for transmission.

In some embodiments, the RF circuitry 807 may include a receive signal path and a transmit signal path. The receive signal path of the RF circuitry 807 may include a mixer circuitry 813A, an amplifier circuitry 813B, and a filter circuitry 813C. The transmit signal path of the RF circuitry 807 may include the filter circuitry 813C and the mixer circuitry 813A. The RF circuitry 807 may further include a synthesizer circuitry 813D configured to synthesize a frequency for use by the mixer circuitry 813A of the receive signal path and the transmit signal path. In some embodiments, the mixer circuitry 813A of the receive signal path may be configured to down-convert RF signals received from the FEM circuitry 809 based on the synthesized frequency provided by the synthesizer circuitry 813D. The amplifier circuitry 813B may be configured to amplify the down-converted signals.

The filter circuitry 813C may include a low-pass filter (LPF) or band-pass filter (BPF) configured to remove unwanted signals from the down-converted signals to generate output baseband signals. Output baseband signals may be provided to the baseband circuitry 805 for further processing. In some embodiments, the output baseband signals may include zero-frequency baseband signals, although this is not a requirement. In some embodiments, the mixer circuitry 813A of the receive signal path may comprise passive mixers, although the scope of the embodiments is not limited in this respect.

In some embodiments, the mixer circuitry 813A of the transmit signal path may be configured to up-convert input baseband signals based on the synthesized frequency provided by the synthesizer circuitry 813D to generate RF output signals for the FEM circuitry 809. The baseband signals may be provided by the baseband circuitry 805 and may be filtered by the filter circuitry 813C. The filter circuitry 813C may include a low-pass filter (LPF), although the scope of the embodiments is not limited in this respect.

In some embodiments, the mixer circuitry 813A of the receive signal path and the mixer circuitry 813A of the transmit signal path may include two or more mixers, and may be arranged for quadrature downconversion and/or upconversion, respectively. In some embodiments, the mixer circuitry 813A of the receive signal path and the mixer circuitry 813A of the transmit signal path may include two or more mixers and may be arranged for image rejection (e.g., Hartley image rejection). In some embodiments, the mixer circuitry 813A of the receive signal path and the mixer circuitry 813A of the transmit signal path may be arranged for direct downconversion and/or direct upconversion, respectively. In some embodiments, the mixer circuitry 813A of the receive signal path and the mixer circuitry 813A of the transmit signal path may be configured for super-heterodyne operation.

In some embodiments, the output baseband signals and the input baseband signals may be analog baseband signals, although the scope of the embodiments is not limited in this respect. In some alternative embodiments, the output baseband signals and the input baseband signals may be digital baseband signals. In such embodiments, the RF circuitry 807 may include analog-to-digital converter (ADC) and digital-to-analog converter (DAC) circuitry, and the baseband circuitry 805 may include a digital baseband interface to communicate with the RF circuitry 807.

In some dual-mode embodiments, separate radio IC circuitry may be provided for processing signals for each spectrum, although the scope of the embodiments is not limited in this respect.

In some embodiments, the synthesizer circuitry 813D may include one or more of a fractional-N synthesizer and a fractional N/N+1 synthesizer, although the scope of the embodiments is not limited in this respect, as other types of frequency synthesizers may be suitable. For example, the synthesizer circuitry 813D may include a delta-sigma synthesizer, a frequency multiplier, a synthesizer comprising a phase-locked loop with a frequency divider, other synthesizers, and combinations thereof.

The synthesizer circuitry 813D may be configured to synthesize an output frequency for use by the mixer circuitry 813A of the RF circuitry 807 based on a frequency input and a divider control input. In some embodiments, the synthesizer circuitry 813D may be a fractional N/N+1 synthesizer.

In some embodiments, frequency input may be provided by a voltage controlled oscillator (VCO), although that is not a requirement. Divider control input may be provided by either the baseband circuitry 805 or the application circuitry 803 depending on the desired output frequency. In some embodiments, a divider control input (e.g., N) may be determined from a look-up table based on a channel indicated by the application circuitry 803.

The synthesizer circuitry 813D of the RF circuitry 807 may include a divider, a delay-locked loop (DLL), a multiplexer and a phase accumulator. In some embodiments, the divider may include a dual modulus divider (DMD), and the phase accumulator may include a digital phase accumulator (DPA). In some embodiments, the DMD may be configured to divide the input signal by either N or N+1 (e.g., based on a carry-out) to provide a fractional division ratio. In some example embodiments, the DLL may include a set of cascaded, tunable, delay elements; a phase detector; a charge pump; and a D-type flip-flop. In such embodiments, the delay elements may be configured to break a VCO period up into Nd equal packets of phase, where Nd is the number of delay elements in the delay line. In this way, the DLL may provide negative feedback to help ensure that the total delay through the delay line is one VCO cycle.

In some embodiments, the synthesizer circuitry 813D may be configured to generate a carrier frequency as the output frequency. In some embodiments, the output frequency may be a multiple of the carrier frequency (e.g., twice the carrier frequency, four times the carrier frequency, etc.) and used in conjunction with a quadrature generator and divider circuitry to generate multiple signals at the carrier frequency with multiple different phases with respect to each other. In some embodiments, the output frequency may be an LO frequency (fLO). In some embodiments, the RF circuitry 807 may include an IQ/polar converter.

The FEM circuitry 809 may include a receive signal path, which may include circuitry configured to operate on RF signals received from the one or more antennas 814, amplify the received signals, and provide the amplified versions of the received signals to the RF circuitry 807 for further processing. The FEM circuitry 809 may also include a transmit signal path, which may include circuitry configured to amplify signals for transmission provided by the RF circuitry 807 for transmission by at least one of the one or more antennas 814.

In some embodiments, the FEM circuitry 809 may include a TX/RX switch configured to switch between a transmit mode and a receive mode operation. The FEM circuitry 809 may include a receive signal path and a transmit signal path. The receive signal path of the FEM circuitry 809 may include a low-noise amplifier (LNA) to amplify received RF signals and provide the amplified received RF signals as an output (e.g., to the RF circuitry 807). The transmit signal path of the FEM circuitry 809 may include a power amplifier (PA) configured to amplify input RF signals (e.g., provided by the RF circuitry 807), and one or more filters configured to generate RF signals for subsequent transmission (e.g., by one or more of the one or more antennas 814).

In some embodiments, the device may include additional elements such as, for example, memory/storage, a display, a camera, one of more sensors, an input/output (I/O) interface, other elements, and combinations thereof.

In some embodiments, the device may be configured to perform one or more processes, techniques, and/or methods as described herein, or portions thereof.

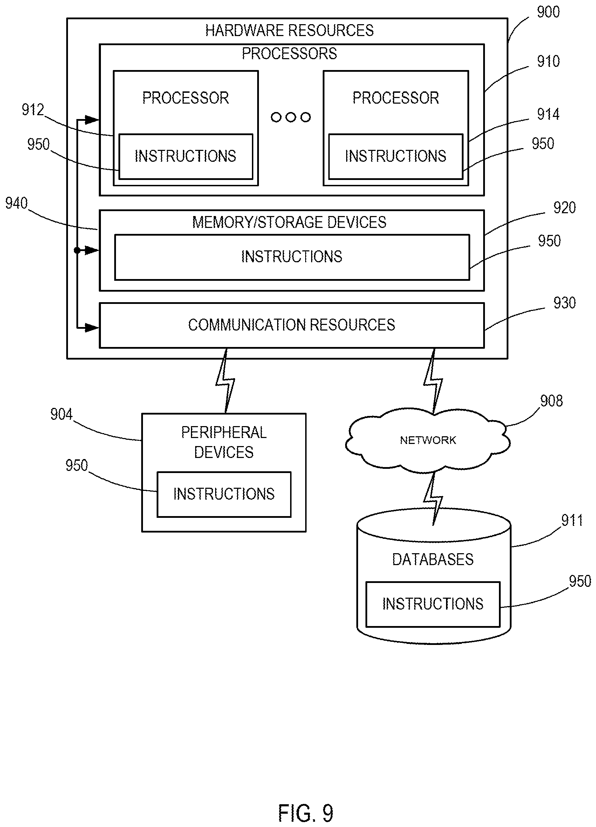

FIG. 9 is a block diagram illustrating components, according to some example embodiments, able to read instructions from a machine-readable or computer-readable medium (e.g., a machine-readable storage medium) and perform any one or more of the methodologies discussed herein. Specifically, FIG. 9 shows a diagrammatic representation of hardware resources 900 including one or more processors (or processor cores) 910, one or more memory/storage devices 920, and one or more communication resources 930, all of which are communicatively coupled via a bus 940.

The processors 910 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 912 and a processor 914. The memory/storage devices 920 may include main memory, disk storage, or any suitable combination thereof.

The communication resources 930 may include interconnection and/or network interface components or other suitable devices to communicate with one or more peripheral devices 904 and/or one or more databases 911 via a network 908. For example, the communication resources 930 may include wired communication components (e.g., for coupling via a Universal Serial Bus (USB)), cellular communication components, Near Field Communication (NFC) components, Bluetooth components (e.g., Bluetooth Low Energy), Wi-Fi components, and other communication components.

Instructions 950 may comprise software, a program, an application, an applet, an app, or other executable code for causing at least one of the processors 910 to perform any one or more of the methodologies discussed herein. The instructions 950 may reside, completely or partially, within at least one of the processors 910 (e.g., within the processor's cache memory), the memory/storage devices 920, or any suitable combination thereof. Furthermore, any portion of the instructions 950 may be transferred to the hardware resources 900 from any combination of the peripheral devices 904 and/or the databases 911. Accordingly, the memory of the processors 910, the memory/storage devices 920, the peripheral devices 904, and the databases 911 are examples of computer-readable and machine-readable media.

Various techniques, or certain aspects or portions thereof, may take the form of program code (i.e., instructions) embodied in tangible media, such as floppy diskettes, CD-ROMs, hard drives, a non-transitory computer-readable storage, medium, or any other machine-readable storage medium wherein, when the program code is loaded into and executed by a machine, such as a computer, the machine becomes an apparatus for practicing the various techniques. In the case of program code execution on programmable computers, the computing device may include a processor, a storage medium readable by the processor (including volatile and non-volatile memory and/or storage elements), at least one input device, and at least one output device. The volatile and non-volatile memory and/or storage elements may be a RAM, an EPROM, a flash drive, an optical drive, a magnetic hard drive, or another medium for storing electronic data. The eNodeB (or other base station) and UE (or other mobile station) may also include a transceiver component, a counter component, a processing component, and/or a clock component or timer component. One or more programs that may implement or utilize the various techniques described herein may use an application programming interface (API), reusable controls, and the like. Such programs may be implemented in a high-level procedural or an object-oriented programming language to communicate with a computer system. However, the program(s) may be implemented in assembly or machine language, if desired. In any case, the language may be a compiled or an interpreted language, and combined with hardware implementations.

It should be understood that many of the functional units described in this specification may be implemented as one or more components, which is a term used to more particularly emphasize their implementation independence. For example, a component may be implemented as a hardware circuit comprising custom very large scale integration (VLSI) circuits or gate arrays, off-the-shelf semiconductors such as logic chips, transistors, or other discrete components. A component may also be implemented in programmable hardware devices such as field programmable gate arrays, programmable array logic, programmable logic devices, or the like.

Components may also be implemented in software for execution by various types of processors. An identified component of executable code may, for instance, comprise one or more physical or logical blocks of computer instructions, which may, for instance, be organized as an object, a procedure, or a function. Nevertheless, the executables of an identified component need not be physically located together, but may comprise disparate instructions stored in different locations that, when joined logically together, comprise the component and achieve the stated purpose for the component.

Indeed, a component of executable code may be a single instruction, or many instructions, and may even be distributed over several different code segments, among different programs, and across several memory devices. Similarly, operational data may be identified and illustrated herein within components, and may be embodied in any suitable form and organized within any suitable type of data structure. The operational data may be collected as a single data set, or may be distributed over different locations including over different storage devices, and may exist, at least partially, merely as electronic signals on a system or network. The components may be passive or active, including agents operable to perform desired functions.

Reference throughout this specification to "an example" means that a particular feature, structure, or characteristic described in connection with the example is included in at least one embodiment. Thus, appearances of the phrase "in an example" in various places throughout this specification are not necessarily all referring to the same embodiment. The invention is defined by the appended claims.

## Claims

1. An apparatus for use in a user equipment, UE, comprising one or more baseband processors configured to:
store (636)a plurality of device profiles (321) comprised of device profile components (222, 322) that characterize a behavior of the UE;
select a device profile (321) from the plurality of device profiles (321) to use during an initial registration of the UE with an evolved packet core, EPC, network, during a service establishment via a service request message or during a radio resource control, RRC, connection establishment;
generate (638), for an evolved node B, eNodeB, uplink data comprising the selected device profile (321);
receive (640), from the eNodeB, a plurality of configurations based on the selected device profile (321); and
configure (642) access of the UE to an evolved packet core, EPC, network based on the plurality of configurations.

2. The apparatus of claim 1, wherein the device profile components (222, 322) are static and a value (224, 324) assigned to any of the device profile components (222, 322) is static.

3. The apparatus of claim 1, wherein the device profile components (222, 322) are dynamic and a value (224, 324) assigned to any of the device profile components (222, 322) is dynamic over time.

4. The apparatus of claim 1, wherein the device profile components (222, 322) are semi-static and a value (224, 324) that is assigned to any of the device profile components (222, 322) is limited.

5. The apparatus of claim 1, wherein the UE is associated with one device profile (321) at a given time.

6. The apparatus of claim 1, wherein the UE is associated with more than one device profile (321) at a given time.

7. The apparatus of claim 1, wherein the one or more baseband processors are further configured to generate a device profile selection for the EPC network.

8. The apparatus of claim 7, wherein the one or more baseband processors configured to generate a device profile selection for the EPC network is further configured to generate the device profile selection via at least one of an attach request and a tracking area update request messages.

9. A computer-readable storage medium having stored thereon instructions that, when executed by one or more baseband processors of a user equipment, UE, cause the UE to:
store (636) a plurality of device profiles (321) comprised of device profile components (222, 322) that characterize a behavior of the UE;
select a device profile (321) from the plurality of device profiles (321) to use during an initial registration of the UE with an evolved packet core, EPC, network, during a service establishment via a service request message or during a radio resource control, RRC, connection establishment;
generate (638), for an evolved node B, eNodeB, uplink data comprising the selected device profile (321);
receive (640), from the eNodeB, a plurality of configurations based on the selected device profile (321); and
configure (642) access of the UE to an evolved packet core, EPC, network based on the plurality of configurations.

10. The computer-readable storage medium of claim 9, wherein the EPC network bars access to the EPC network for UEs that are, at least, configured with the selected device profile (321).

11. The computer-readable storage medium of claim 9, wherein the EPC network bars access to the EPC network for UEs that are configured with the selected device profile (321) and a communication type.

12. The computer-readable storage medium of claim 9, wherein the EPC network bars access to the EPC network for UEs that are configured with the selected device profile (321) and request access to the EPC to support at least one of a type of service and application.

13. The computer-readable storage medium of claim 9, wherein the EPC network bars access to the EPC network for UEs that are configured with the selected device profile (321), a communication type, and request access to the EPC to support at least one of a type of service and application.

14. The computer-readable storage medium as in any one of claims 9 to 13, wherein the EPC network includes a RAN node that broadcasts at least one type of device (400) that is barred to access the EPC network based at least on a selected device profile (321).

15. The computer-readable storage medium as in any one of claims 9 to 13, wherein the instructions also cause the computing device to configure a UE that is configured with the selected device profile (321) to bar access to the EPC network.

## Patentansprüche

1. Vorrichtung zur Verwendung in einem Benutzergerät, UE, umfassend einen oder mehrere Basisbandprozessoren, die konfiguriert sind zum:
Speichern (636) einer Vielzahl von Geräteprofilen (321), die aus Geräteprofilkomponenten (222, 322) bestehen, die ein Verhalten des UE kennzeichnen;
Auswählen eines Geräteprofils (321) aus der Vielzahl von Geräteprofilen (321) zur Verwendung während einer ersten Registrierung des UE mit einem EPC-, Evolved Packet Core, Netzwerk, während des Aufbaus eines Dienstes über eine Dienstanforderungsnachricht oder während eines Funkressourcensteuerungs-, RRC, Verbindungsaufbaus;
Erzeugen (638), für einen entwickelten B-Knoten, eNodeB, von Uplink-Daten, die das ausgewählte Geräteprofil (321) umfassen;
Empfangen (640), von der eNodeB, einer Vielzahl von Konfigurationen basierend auf dem ausgewählten Geräteprofil (321); und
Konfigurieren (642) des Zugriffs des UEs auf ein EPC-, Evolved Packet Core, Netzwerk basierend auf der Vielzahl von Konfigurationen.

2. Vorrichtung nach Anspruch 1, wobei die Geräteprofilkomponenten (222, 322) statisch sind und ein Wert (224, 324), der einer der Geräteprofilkomponenten (222, 322) zugewiesen ist, statisch ist.

3. Vorrichtung nach Anspruch 1, wobei die Geräteprofilkomponenten (222, 322) dynamisch sind und ein Wert (224, 324), der einer der Geräteprofilkomponenten (222, 322) zugewiesen ist, über die Zeit dynamisch ist.

4. Vorrichtung nach Anspruch 1, wobei die Geräteprofilkomponenten (222, 322) halbstatisch sind und ein Wert (224, 324), der einer der Geräteprofilkomponenten (222, 322) zugewiesen ist, begrenzt ist.

5. Vorrichtung nach Anspruch 1, wobei das UE zu einem gegebenen Zeitpunkt einem Geräteprofil (321) zugeordnet ist.

6. Vorrichtung nach Anspruch 1, wobei das UE zu einem gegebenen Zeitpunkt mehr als einem Geräteprofil (321) zugeordnet ist.

7. Vorrichtung nach Anspruch 1, wobei der eine oder die mehreren Basisbandprozessoren ferner dafür konfiguriert sind, eine Geräteprofilauswahl für das EPC-Netzwerk zu erzeugen.

8. Vorrichtung nach Anspruch 7, wobei der eine oder die mehreren Basisbandprozessoren, die zum Erzeugen einer Geräteprofilauswahl für das EPC-Netzwerk konfiguriert sind, ferner dafür konfiguriert sind, die Geräteprofilauswahl über mindestens eine von einer Anschlussanforderungs- und einer Verfolgungsbereichs-Aktualisierungsanforderungs-Nachricht zu erzeugen.

9. Computerlesbares Speichermedium mit darauf gespeicherten Anweisungen, die, wenn sie von einem oder mehreren Basisbandprozessoren eines Benutzergeräts, UE ausgeführt werden, das UE veranlassen zum:
Speichern (636) einer Vielzahl von Geräteprofilen (321), die aus Geräteprofilkomponenten (222, 322) bestehen, die ein Verhalten des UE kennzeichnen;
Auswählen eines Geräteprofils (321) aus der Vielzahl von Geräteprofilen (321) zur Verwendung während einer ersten Registrierung des UE mit einem EPC-, Evolved Packet Core, Netzwerk während des Aufbaus eines Dienstes über eine Dienstanforderungsnachricht oder während eines Funkressourcensteuerungs-, RRC, Verbindungsaufbaus;
Erzeugen (638), für einen entwickelten B-Knoten, eNodeB, von Uplink-Daten, die das ausgewählte Geräteprofil (321) umfassen;
Empfangen (640), von der eNodeB, einer Vielzahl von Konfigurationen basierend auf dem ausgewählten Geräteprofil (321); und
Konfigurieren (642) des Zugriffs des UEs auf ein EPC-, Evolved Packet Core, Netzwerk basierend auf der Vielzahl von Konfigurationen.

10. Computerlesbares Speichermedium nach Anspruch 9, wobei das EPC-Netzwerk den Zugriff auf das EPC-Netzwerk für UEs, die zumindest mit dem ausgewählten Geräteprofil (321) konfiguriert sind, sperrt.

11. Computerlesbares Speichermedium nach Anspruch 9, wobei das EPC-Netzwerk den Zugriff auf das EPC-Netzwerk für UEs sperrt, die mit dem ausgewählten Geräteprofil (321) und einem Kommunikationstyp konfiguriert sind.

12. Computerlesbares Speichermedium nach Anspruch 9, wobei das EPC-Netzwerk den Zugriff auf das EPC-Netzwerk für UEs sperrt, die mit dem ausgewählten Geräteprofil (321) konfiguriert sind und einen Zugriff auf das EPC anfordern, um mindestens einen Typ von Dienst und Anwendung zu unterstützen.

13. Computerlesbares Speichermedium nach Anspruch 9, wobei das EPC-Netzwerk den Zugriff auf das EPC-Netzwerk für UEs sperrt, die mit dem ausgewählten Geräteprofil (321) und einem Kommunikationstyp konfiguriert sind und Zugriff auf den EPC anfordern, um zumindest einen Typ von Dienst und Anwendung zu unterstützen.

14. Computerlesbares Speichermedium nach einem der Ansprüche 9 bis 13, wobei das EPC-Netzwerk einen RAN-Knoten umfasst, der mindestens einen Gerätetyp (400) überträgt, dem der Zugriff auf das EPC-Netzwerk zumindest basierend auf ein ausgewähltes Geräteprofil (321) gesperrt ist.

15. Computerlesbares Speichermedium nach einem der Ansprüche 9 bis 13, wobei die Anweisungen auch veranlassen, dass das Computergerät ein mit dem ausgewählten Geräteprofil (321) konfiguriertes UE konfiguriert, um den Zugriff auf das EPC-Netzwerk zu sperren.

## Revendications

1. Appareil destiné à être utilisé dans un équipement utilisateur, UE, comprenant un ou plusieurs processeurs de bande de base configurés pour :
stocker (636) une pluralité de profils de dispositif (321) constitués de composants (222, 322) de profils de dispositif qui caractérisent un comportement de l'UE ;
sélectionner un profil de dispositif (321) parmi la pluralité de profils de dispositif (321) à utiliser lors d'un enregistrement initial de l'UE avec un réseau central de paquets évolué, EPC, lors d'un établissement de service via un message de demande de service ou lors d'un établissement d'une connexion de contrôle de ressources radio, RRC ;
générer (638), pour un noeud évolué B, eNodeB, des données de liaison montante comprenant le profil de dispositif (321) sélectionné ;
recevoir (640), en provenance du eNodeB, une pluralité de configurations basées sur le profil de dispositif (321) sélectionné ; et
configurer (642) l'accès de l'UE à un réseau central de paquets évolué, EPC, sur la base de la pluralité de configurations.

2. Appareil selon la revendication 1, dans lequel les composants (222, 322) de profils de dispositif sont statiques et une valeur (224, 324) attribuée à l'un quelconque des composants (222, 322) de profils de dispositif est statique.

3. Appareil selon la revendication 1, dans lequel les composants (222, 322) de profils de dispositif sont dynamiques et une valeur (224, 324) attribuée à l'un quelconque des composants (222, 322) de profils de dispositif est dynamique dans le temps.

4. Appareil selon la revendication 1, dans lequel les composants (222, 322) de profils de dispositif sont semistatiques et une valeur (224, 324) qui est attribuée à l'un quelconque des composants (222, 322) de profils de dispositif est limitée.

5. Appareil selon la revendication 1, dans lequel l'UE est associé à un profil de dispositif (321) à un instant donné.

6. Appareil selon la revendication 1, dans lequel l'UE est associé à plus d'un profil de dispositif (321) à un instant donné.

7. Appareil selon la revendication 1, dans lequel lesdits un ou plusieurs processeurs de bande de base sont en outre configurés pour générer une sélection de profils de dispositif pour le réseau EPC.

8. Appareil selon la revendication 7, dans lequel lesdits un ou plusieurs processeurs de bande de base configurés pour générer une sélection de profils de dispositif pour le réseau EPC sont en outre configurés pour générer la sélection de profils de dispositif via au moins un parmi une demande de connexion et des messages de demande de mise à jour de zone de suivi.

9. Support de stockage lisible par ordinateur sur lequel sont stockées des instructions qui, lorsqu'elles sont exécutées par un ou plusieurs processeurs de bande de base d'un équipement utilisateur, UE, amènent l'UE à :
stocker (636) une pluralité de profils de dispositif (321) constitués de composants (222, 322) de profils de dispositif qui caractérisent un comportement de l'UE ;
sélectionner un profil de dispositif (321) parmi la pluralité de profils de dispositif (321) à utiliser lors d'un enregistrement initial de l'UE avec un réseau central de paquets évolué, EPC, lors d'un établissement de service via un message de demande de service ou lors d'un établissement d'une connexion de contrôle de ressources radio, RRC ;
générer (638), pour un noeud évolué B, eNodeB, des données de liaison montante comprenant le profil de dispositif (321) sélectionné ;
recevoir (640), en provenance du eNodeB, une pluralité de configurations basées sur le profil de dispositif (321) sélectionné ; et
configurer (642) l'accès de l'UE à un réseau central de paquets évolué, EPC, sur la base de la pluralité de configurations.

10. Support de stockage lisible par ordinateur selon la revendication 9, dans lequel le réseau EPC interdit l'accès au réseau EPC pour les UE qui sont, au moins, configurés avec le profil de dispositif (321) sélectionné.

11. Support de stockage lisible par ordinateur selon la revendication 9, dans lequel le réseau EPC interdit l'accès au réseau EPC pour les UE qui sont configurés avec le profil de dispositif (321) sélectionné et avec un type de communication.

12. Support de stockage lisible par ordinateur selon la revendication 9, dans lequel le réseau EPC interdit l'accès au réseau EPC pour les UE qui sont configurés avec le profil de dispositif (321) sélectionné et qui demandent l'accès à l'EPC pour prendre en charge au moins un parmi un type de services et une application.

13. Support de stockage lisible par ordinateur selon la revendication 9, dans lequel le réseau EPC interdit l'accès au réseau EPC pour les UE qui sont configurés avec le profil de dispositif (321) sélectionné, avec un type de communication, et qui demandent l'accès à l'EPC pour prendre en charge au moins un type de service et d'application.

14. Support de stockage lisible par ordinateur selon l'une quelconque des revendications 9 à 13, dans lequel le réseau EPC comprend un noeud RAN qui diffuse au moins un type de dispositif (400) qui est interdit d'accès au réseau EPC sur la base d'au moins un profil de dispositif (321) sélectionné.

15. Support de stockage lisible par ordinateur selon l'une quelconque des revendications 9 à 13, dans lequel les instructions amènent également le dispositif informatique à configurer un UE qui est configuré avec le profil de dispositif sélectionné (321) pour interdire l'accès au réseau EPC.
